# EUROPÄISCHE PATENTSCHRIFT

(11) **EP 1 180 499 B1**
(45) Veröffentlichungstag und Bekanntmachung des Hinweises auf die Patenterteilung: **23.07.2003**
(21) Anmeldenummer: 01119307.5
(22) Anmeldetag: 10.08.2001
(51) Int. Cl.: C02F 3/32, C02F 11/00, C05F 7/00, C02F 11/16

(54) **Verfahren zur Vererdung einer wässrigen Suspension organischer Stoffe, insbesondere von Klärschlamm**
Process for transforming into humus an aqueous suspension of organic matter, especially sewage sludge
Procédé de transformation en humus d'une suspension aqueuse de matiére organique, en particulier des boues d'égout

(30) Priorität: 11.08.2000 DE 10039228
(43) Veröffentlichungstag der Anmeldung: 20.02.2002
(73) Patentinhaber: Pauly, Udo, Dr., 26629 Grossefehn (DE)
(72) Erfinder: von Borcke, Peter, 37249 Neu-Eichenberg/OT Berge (DE)
(74) Vertreter: Patentanwälte Rehberg + Hüppe

(56) Entgegenhaltungen:
- EP-A- 0 649 825
- EP-A- 0 976 683
- DE-A- 4 436 659
- FR-A- 2 795 398
- US-A- 5 078 882

## Beschreibung

Die Erfindung bezieht sich auf ein Verfahren zur Vererdung einer wässrigen Suspension organischer Stoffe, insbesondere von Klärschlamm, bei dem die Suspension über einen Zeitraum von mehreren Jahren intervallweise von oben in ein Vererdungsbecken eingebracht wird, wobei sich in dem Vererdungsbecken über einer unteren Abdichtung eine Drainageschicht und eine Pflanzsubstratschicht befindet, in die Pflanzen eingepflanzt sind.

Bekannte Verfahren der eingangs beschriebenen Art (vgl. z.B. EP-A-0 976 683) werden verwendet, um Klärschlämme, die bei Kläranlagen mit nur geringem Trockensubstanzanteil anfallen, zu vererden, d. h. extrem aufzukonzentrieren. Sie sind eine Alternative zu einem mechanischen Aufkonzentrieren von Klärschlamm und zeichnen sich beispielsweise durch einen deutlich geringeren Energieverbrauch, die Verzichtbarkeit von Chemikalien, hohe Wirtschaftlichkeit und ein interessantes Endprodukt aus.

Allerdings ist die Zusammensetzung des Endprodukts aus der Klärschlammvererdung naturgemäß von der Zusammensetzung der eingesetzten Klärschlämme abhängig. Diese Zusammensetzung weicht häufig von der gewünschten Zusammensetzung hochwertiger Erden und Substrate ab.

Außerhalb des Bereichs der Klärschlammvererdung der eingangs beschriebenen Art ist es vielfach bekannt, Klärschlämme mit verschiedenen Zuschlägen anzureichern, um höherwertigere Erden und Substrate zu gewinnen.

Die DE 44 36 659 C2 beschreibt ein Verfahren, bei dem teilentwässerte Klärschlämme insbesondere mit organischen Strukturmaterialien wie Grünguthächsel oder Stroh vermischt und dann kompostiert werden. Die so hergestellten Komposte werden mit mineralischen Materialien, wie Bodenaushub, Sand, Lehm, Ton, Zeolithen, Abfällen aus dem Bauschuttrecycling, industriellen Abfällen in Form von Gips, Kalk, Aschen und Filterkuchen vermischt. Diese Mischungen sollen nach einer Stabilisierungsphase als Erden im Garten-, Landschafts- und Sportplatzbau verwendet werden. Es ist jedoch festzustellen, daß selbst bei der Verwendung hochwertiger mineralischer Materialien als Zuschläge nicht die feine Verteilung und Einbindung der Mineralien erreicht wird, wie sie für hochwertige Erden Voraussetzung ist.

Gemäß der DE 34 09 274 C1 werden teilentwässerte Klärschlämme im Volumenverhältnis von 1:2 mit Ölschieferschlacke vermischt. Ölschieferschlacke enthält in hohen Anteilen Tonmineralien. Das Gemisch soll direkt als Bodenverbesserungsmittel für verschiedene Zwecke im Garten- und Landschaftsbau verwendet werden. Auch hier enthält das Verfahrensprodukt zwar potentiell hochwertige Mineralien. Sie sind aber wieder nicht in der idealen Form eingebunden.

Aus der DE 3205717 C2 ist ein Verfahren zum Verarbeiten von Klärschlamm bekannt, bei dem ein Gemisch aus 40 bis 70 Gew.-% Klärschlamm, der auf einen Trockensubstanzgehalt von 15 bis 20 Gew.-% entwässert ist, und 20 bis 50 Geew.-% tonmineralhaltiger Masse hergestellt. Dieses Gemisch wird mit hocherhitzter mineralischer Masse zur Abtötung unerwünschter Keime aus dem Klärschlamm im Gewichtsverhältnis klärschlammhaltiges Gemisch zu heißer mineralischer Masse von 1:1 bis 4:1 versetzt. Auch hier ist die Einbindung des Tons in den Klärschlamm nicht ideal. Gleichzeitig sind der insbesondere in energetischer Hinsicht hohe Aufwand und die dadurch bedingten Kosten nachteilig.

Der Erfindung liegt daher die Aufgabe zugrunde, ein Verfahren der eingangs beschriebenen Art aufzuzeigen, mit dem Erden und Substrate erhalten werden können, bei denen die Mineralien in idealer Weise verteilt und eingebunden sind.

Erfindungsgemäß wird diese Aufgabe dadurch gelöst, daß Tonmineralien zu der Suspension organischer Stoffe zugegeben werden. Bei dem neuen Verfahren werden die Tonmineralien der Ausgangssubstanz, d. h. beispielsweise dem noch zu vererdenden Klärschlamm zugegeben. Auf diese Weise wird eine Verteilung der Tonmineralien zu Beginn der Vererdung erreicht, die derjenigen der weiteren Bestandteile des Klärschlamms entspricht. In der anschließenden Vererdungsphase erfolgt nicht nur die reine Vererdung des Klärschlamms sondern gleichzeitig die Einbindung der Tonminerale in die entstehenden Erden. Alle physikalischen und biologischen sowie chemischen Prozesse während der Vererdung wirken gleichzeitig und gemeinsam auf die organischen Stoffe und die Tonmineralien ein. So werden die Tonmineralien in Abbauprodukte der organischen Stoffe mit eingebaut und führen zu einer Stabilisierung dieser Abbauprodukte. Dabei spielt insbesondere die gemeinsame Durcharbeitung der Trockensubstanz des Klärschlamms und der Tonminerale durch Kompostwürmer eine entscheidende Rolle.

Die Tonmineralien können der Suspension organischer Stoffe in ebenfalls suspendierter Form zugegeben werden. Bei Durchmischung beider Suspensionen ist eine bereits homogene Ausgangsverteilung aller miteinander zu vererdender Substanzen sichergestellt. Eine solche Vermischung der Substanzen kann insbesondere dann leicht durchgeführt werden, wenn die Tonmineralien der Suspension organischer Stoffe vor deren Einbringen in das Vererdungsbecken zugegeben werden. Grundsätzlich ist es aber auch möglich, die Suspension organischer Stoffe und die Suspension der Tonmineralien getrennt voneinander in das Vererdungsbecken einzubringen, sofern sichergestellt ist, daß sich beide Suspensionen jeweils über das gesamte Vererdungsbecken verteilen. Dabei ist es auch möglich, die Tonmineralien bezogen auf die in das Vererdungsbecken eingebrachte Suspension organischer Stoffe nur diskontinuierlich zuzugeben. So können die Tonmineralien sogar als Tonmehl auf das Vererdungsbecken aufgeblasen werden, beispielsweise zur Winterzeit, wenn der Pflanzenbewuchs oberirdisch abgestorben ist. Die bei der Vererdung erheblich beteiligten Kompostwürmer gleichen gewisse Inhomogenitäten der Verteilung der Tonmineralien in den anderen Ausgangsstoffen der Vererdung bei ihrer Durcharbeitung des Inhalts des Vererdungsbeckens aus.

Unabhängig von der Art des Zugebens der Tonmineralien zu der Substanz organischer Stoffe ist festzustellen, daß der hierfür zu betreibende Aufwand relativ gering ist. Darüberhinaus ist festzustellen, daß die Kapazität der Vererdungsbecken, die nicht durch das Gewicht sondern das zusätzliche Volumen eingebrachter Materialien bestimmt wird, durch die Zugabe selbst relativ großer Massen an Tonmineralien nicht erheblich eingeschränkt wird. Zu berücksichtigen ist in diesem Zusammenhang natürlich auch, daß die Qualität der gewonnenen Erden durch die in idealer Weise eingebundenen Tonmineralien erheblich gesteigert ist. Die Reduzierung der Kapazität der Vererdungsbecken richtet sich vor allem nach der relativen Menge der zugegebenen Tonmineralien. Während dies dafür spräche, nur geringe Mengen an Tonmineralien zuzugeben, wächst die Qualität von nach dem neuen Verfahren gewonnenen Erden und Substraten mit zunehmendem Anteil an Tonmineralien an. Unter Berücksichtigung beider Gesichtspunkte sollten die Tonmineralien der Suspension organischer Stoffe bei dem neuen Verfahren in einer solchen Menge zugesetzt werden, daß sich in dem Vererdungsbecken letztlich, d. h. nach erfolgter Vererdung, ein Massenverhältnis Ton zu Humus von 0,5 bis 5 einstellt. Dies bedeutet die Zugabe von etwa 10,5 bis 105 kg Ton zu 100 kg Klärschlammtrockenmasse üblicher Zusammensetzung eines aerob stabilisierten Schlamms. Bezogen auf die organische Substanz der Suspension organischer Stoffe, d. h. ohne Berücksichtigung der mineralischen Anteile sollten je 100 kg organischer Substanz etwa 17,5 bis 175 kg Tonmineralien zugegeben werden.

Zusätzlich zu den Tonmineralien können bei dem neuen Verfahren der Suspension organischer Stoffe weiterhin Kalk, Sand, Schluff, Gesteinsmehle, Sägemehl, Nährsalze, Säuren, Basen und/oder als Säuren oder Basen wirksame Stoffe zugegeben werden. Diese Stoffe dienen zur Einstellung optimaler Reaktionsbedingungen für die Ausbildung hochwertiger Erden und Substrate in dem Vererdungsbecken. Dabei können mit den genannten Zuschlägen unter anderem der gewünschte Anteil von Mineralstoffen, ein gewünschtes Entwässerungsverhalten, ein gewünschtes C:N Verhältnis in der organischen Substan und ein gewünschter pH-Wert eingestellt werden.

Als Ausgangsmaterial für das neue Verfahren, d. h. als Suspension organischer Stoffe kann ein aerob oder anaerob stabilisierter Klärschlamm, aber auch ein anderweitig unter Methanentwicklung entstandenes Gärprodukt verwendet werden. Auch andere Suspensionen organischer Stoffe, wie sie als Abfallstoffe anfallen können, sind einsetzbar, wobei eine vorherige Stabilisierung durchgeführt werden sollte. Auch bei den Tonmineralien, welche erfindungsgemäß bei dem neuen Verfahren verwendet werden, kann es sich letztlich ebenfalls um Abfallstoffe handeln, so beispielsweise Abfallstoffe aus der Füllstoffproduktion oder der Papierindustrie, wo tonmineralienhaltige Suspensionen zu entsorgen sind.

Das neue Verfahren stellt die ideale Einbindung der Tonmineralien in die gewonnenen Erden auch deshalb sicher, weil es bei der Vererdung der Ausgangssubstanzen von sehr langen Zeiträumen ausgeht. Typischerweise wird die Suspension organischer Stoffe über einen Zeitraum von sechs bis fünfzehn Jahren in das Vererdungsbecken eingebracht, wobei das Vererdungsbecken anschließend für ein bis eineinhalb Jahre stehengelassen wird. In dem Zeitraum von etwa einem Jahr, in dem das Vererdungsbecken abschließend stehengelassen wird, werden die biologischen, physikalischen und chemischen Umsetzungen der Ausgangsmaterialien bzw. die bodenbildenden Prozesse weitgehend abgeschlossen. Danach werden die gewonnenen Erden bzw. Substrate dem Vererdungsbecken entnommen. Sie können dann unmittelbar als Erden bzw. Substrate eingesetzt werden. In der Regel ist eine einhalbbis einjährige Nachlagerung z.B. in Mieten unter anderem zwecks weiterer Abtrocknung, Abbau von Schilfsubstanz und weiterer Stabilisierung sinnvoll. Dabei können dem neuen Produkt weitere Stoffe der bereits genannten Arten zugemischt werden.

Die Drainageschicht unterhalb der Pflanzsubstratschicht in dem Vererdungsbecken ist vorzugsweise aus Drainagekies ausgebildet, über den aus dem Vererdungsbecken nahezu feststofffreies Wasser abziehbar ist. Die Pflanzsubstratschicht über den Drainagekies sollte beim Räumen der Vererdungsbecken nicht entnommen werden. Vielmehr kann sich der Bewuchs des Vererdungsbeckens aus dem hierin verbliebenen Wurzelwerk nach dem Räumen des Vererdungsbeckens neu ausbilden.

Vorzugsweise sind die in das Pflanzsubstrat eingepflanzten Pflanzen Schilfpflanzen. Schilfpflanzen weisen gegenüber anderen Pflanzen für Vererdungsbecken den Vorteil der Ausbildung von fein verteilten Belüftungs-/Entwässerungskanälen durch ihr Wurzelwerk auf.

Die Erfindung wird im folgenden anhand von zwei Ausführungsbeispielen näher erläutert und beschrieben. Dabei zeigt
- Figur 1: in sechs Teilbildern den langjährigen Ablauf des Verfahrens beim Vererden von Klärschlamm,
- Figur 2: den Einsatz von Tonmineralien bei dem Verfahren zum Vererden von Klärschlamm und
- Figur 3: den zusätzlichen Einsatz reaktionsmodifizierender Zusätze bei dem Verfahren zur Vererdung von Klärschlamm.

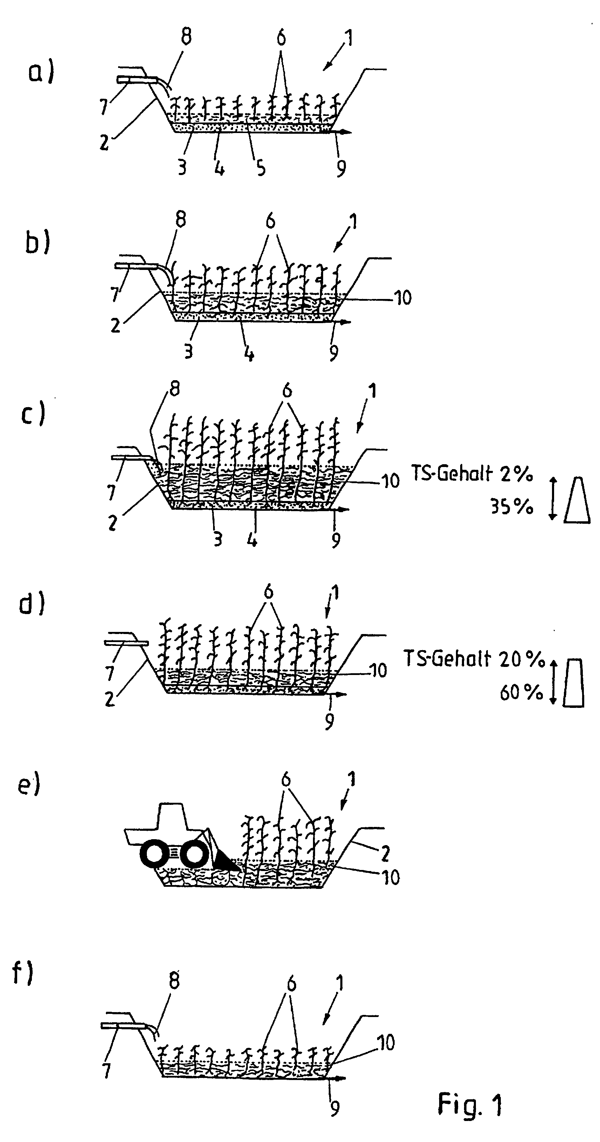

In Figur 1a ist ein Vererdungsbecken 1 in einem schematischen Querschnitt dargestellt. Das Vererdungsbecken 1 wird seitlich und nach unten durch eine Abdichtung 2 begrenzt. In das Vererdungsbecken 1 ist auf die Abdichtung 2 eine Drainageschicht 3 aus Drainagekies 4 eingebracht. Auf der Drainageschicht 3 befindet sich ein Pflanzsubstrat 5, in das Schilfpflanzen 6 eingepflanzt sind. Über einen Zulauf 7 wird Klärschlamm 8 von oben in das Vererdungsbecken 1 eingelassen. Über die Drainageschicht 3 wird Wasser 9, das durch einen Pfeil angedeutet ist, aus dem Vererdungsbecken 1 abgezogen. Weiteres Wasser wird von den Schilfpflanzen 6 verdunstet. Figur 1a zeigt den Zustand des Vererdungsbeckens 1 im ersten Jahr der Durchführung des neuen Verfahrens zur Vererdung des Klärschlamms 8. Der Klärschlamm 8 wird intervallweise in das Vererdungsbecken 1 eingebracht.

Figur 1b zeigt den Zustand des Vererdungsbeckens 1 im zweiten Jahr. Es wird weiterhin Klärschlamm 8 in das Vererdungsbecken 1 eingebracht und Wasser 9 aus dem Vererdungsbecken 1 abgezogen. Dabei wächst die Schicht von aufgelandetem Schlamm 10 kontinuierlich an und wird von dem Wurzelwerk der Schilfpflanzen 6 durchsetzt und auf diese Weise drainiert und belüftet.

Figur 1c zeigt den Zustand im dritten bis achten Jahr der Durchführung des neuen Verfahrens. Gegenüber Figur 1b ist die Schicht des aufgelandeten Schlamms 10 stark angewachsen. Ebenso ist das Wurzelwerk und die Grünmasse der Schilfpflanzen 6 größer geworden. Im rechten Teil von Figur 1c ist der Trockensubstanzgehalt (TS-Gehalt) der Füllung des Vererdungsbeckens 1 im dritten und vierten Jahr der Durchführung des Verfahrens angedeutet. Im oberen Bereich des Vererdungsbeckens liegt der Trockensubstanzgehalt des zuletzt aufgelandeten Klärschlamms bei 1 bis 5 %. In den darunter befindlichen Bereichen sind bereits deutlich vergrößerte Trockensubstanzgehalte erreicht.

Figur ld zeigt das Vererdungsbecken 1 im neunten Jahr der Durchführung des neuen Verfahrens. Die Zufuhr des Klärschlamms ist eingestellt. Der aufgelandete Klärschlamm 10 wird weiter getrocknet und vererdet, wobei weiter Wasser 9 aus dem unteren Bereich des Vererdungsbeckens 1 abgezogen werden kann. Der im rechten Teil von Figur ld angedeutete Trockensubstanzgehalt kann dabei schon Werte bis zu 60 % erreichen.

Am Ende des neunten Jahres der Durchführung des Verfahrens wird das Vererdungsbecken wie in Figur 1e skizziert teilweise geräumt. Die dabei entnommene Erde hat aufgrund ihrer Struktur, Hygiene, Pflanzenverträglichkeit, Schad- sowie Nährstoffbindung und ihrer Belebtheit sehr gute Chancen bei einer Vermarktung auf konventionellen Wegen in der Landwirtschaft zusätzlich aber als neues Klärschlammprodukt auch im Garten- und Landschaftsbau, wo sie als Substrat oder Substratkomponente einsetzbar ist.

Figur 1f zeigt das Vererdungsbecken 1 im zehnten Jahr der Durchführung des Verfahrens. Aus dem in dem Vererdungsbecken 1 verbliebenen Wurzelwerk sind neue Schilfpflanzen 6 ausgeschlagen. Neuer Klärschlamm 8 wird in das Vererdungsbecken 1 zum Auflanden und Vererden eingebracht. Funktionell entspricht das Vererdungsbecken 1 gemäß Figur 1f dem Vererdungsbecken 1 gemäß Figur 1a im ersten Jahr.

Der hier beschriebene Verfahrenszyklus von 9 Jahren kann auch um ein bis maximal drei Jahre verkürzt oder um bis zu 7 Jahre verlängert werden.

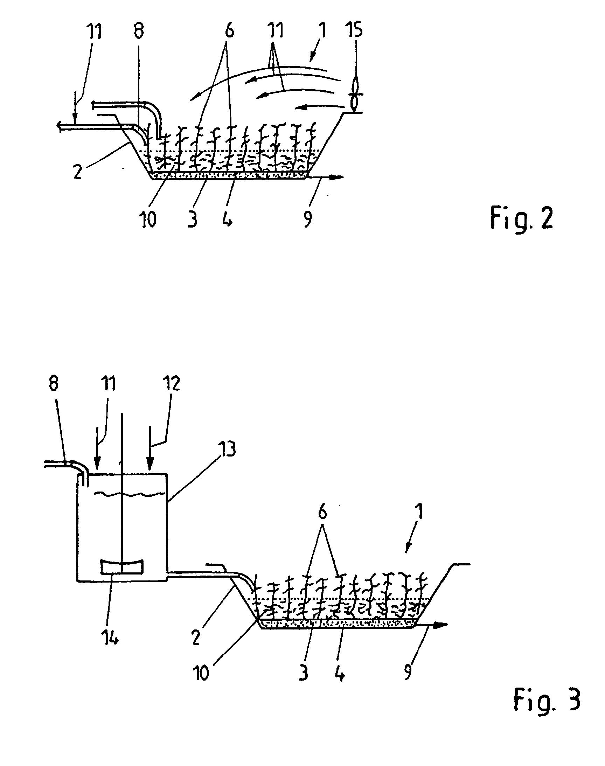

Figur 2 deutet verschiedene Möglichkeiten an, wie bei einem erfindungsgemäßen Verfahren zur Vererdung von Klärschlamm Tonminerale 11 zusätzlich zu dem Klärschlamm 8, d. h. zusätzlich zu einer Suspension organischer Stoffe, in das Vererdungsbecken 1 eingebracht werden können. So ist es einmal möglich, die Tonminerale 11 dem Klärschlamm 8 vor dem Einbringen in das Vererdungsbecken 1 zuzusetzen. Dabei können die Tonminerale 11 in dem Klärschlamm 8 suspendiert oder dem Klärschlamm 8 bereits als Suspension zugeführt werden. Daneben ist es möglich, eine zusätzliche Suspension der Tonminerale 11 in das Vererdungsbecken 1 einzubringen. Dies würde sich dann anbieten, wenn eine Tonminerale enthaltene Suspension als Abfallstoff beispielsweise aus der Füllstoffherstellung oder der Papierindustrie verfügbar ist. Letztlich können die Tonminerale 11 auch als Tonmehl über dem Vererdungsbecken 1 beispielsweise mit einem Gebläse 15 verblasen werden. Bei keiner der hier angedeuteten Möglichkeiten der Zugabe der Tonminerale ist es erforderlich, daß die Tonminerale 11 immer parallel mit dem Klärschlamm 8 in das Vererdungsbecken 1 eingebracht werden. Die Durcharbeitung der eingebrachten Substanzen durch Kompostwürmer in dem Vererdungsbecken 1 stellt sicher, daß gewisse Inhomogenitäten in der Teilung der Ausgangssubstanzen bei der Vererdung ausgeglichen werden. So kann das Aufblasen der Tonminerale 11 als Tonmehl mit dem Gebläse 15 auf die Wintermonate konzentriert werden, in denen der überirdische Anteil der Schilfpflanzen abgestorben ist. Die Menge der zuzugebenden Tonminerale ist unter Berücksichtigung der Tatsache festzulegen, daß leistungsfähige Erden zwischen 5 und 25 Gewichtsprozent Ton bei einem Gehalt von 3 bis 12 Gewichtsprozent organische Substanz enthalten sollten. Um die Kapazität des Vererdungsbeckens 1 durch die Zugabe von Tonmineralien nicht nennenswert zu reduzieren, sollten bei dem neuen Verfahren Tongehalte der entstehenden Erden von 15 bis 65 % Ton angestrebt werden. Dies bedeutet, daß die Ausgangssubstanzen so eingestellt werden sollten, daß das Massenverhältnis Ton zu Humus, welches sich langfristig mit der Vererdung in dem Vererdungsbecken, d.h. dann konkret bei dem neuen Vererdungsprodukt, einstellt, zwischen 0,5 und 5 liegt. Bei Kenntnis der Ausgangssubstanzen in dem Klärschlamm kann leicht auf die zu erwartende Humusmasse geschlossen werden. Beispielsweise weist ein typischer aerostabilisierter Klärschlamm einen Anteil von 60 % organischer Substanz in seiner Trockenmasse auf. Die Vererdung in Schilfbeeten führt zu einer Reduktion der mit dem Klärschlamm angebrachten organische Substanz um etwa 65 %. Dies bedeutet, daß bezogen auf die Trockensubstanz des Klärschlamms 10,5 bis 105 Gewichtsprozent Tonmineralien zuzugeben sind, um das Massenverhältnis Ton zu Humus auf 0,5 bis 5 einzustellen. D. h., daß für einen Klärschlamm mit einem Trockensubstanzgehalt von 2,5 % 2,6 bis 26 kg Tonmineralien in 1 m³ Klärschlamm zu suspendieren sind.

Figur 3 skizziert neben der Zugabe der Tonmineralien 11 zu dem Klärschlamm 8 die ergänzende Zugabe von reaktionsmodifizierenden Zusätzen für die Vererdung in dem Vererdungsbecken 1. Bei diesen reaktionsmodifizierenden Zusätzen 12 kann es sich um Kohlenstoffreiche Substanzen wie beispielsweise Sägemehl, Papierschlamm oder stickstoffarme Gärreste handeln, um den bei der Umsetzung des Klärschlamm frei werdenden mineralischen Stickstoff organisch zu binden. Damit kann unter anderem der Stickstoffaustrag aus dem Vererdungsbecken vermindert und die häufig durch einen hohen Gehalt an mineralischem Stickstoff begrenzte Aufwandmenge des Vererdungsprodukts erhöht werden. Weiterhin können als reaktionsmodifizierende Zusätze 12 pH-Regulatoren in Form von Säuren und Basen bzw. von als Säuren und Basen wirkenden Substanzen eingesetzt werden, um beispielsweise den pH-Wert auf den Neutralpunkt zwischen 6,5 und 7,5 einzustellen. Je nach Art des eingesetzten Klärschlamms 8 bzw. der vererdeten Suspension organischer Stoffe kann diese einen hiervon zunächst deutlich abweichenden pH-Wert aufweisen. Weitere mögliche reaktionsmodfizierende Zusätze können Gesteinsmehle zur Anreicherung weiterer Mineralstoffe sein. Daneben kann beispielsweise auch Sand zugegeben werden, um das Entwässerungsverhalten der gewonnenen Erde einzustellen. Alternativ zu Sand kann auch ein grober Schluff eingesetzt werden. Alle reaktionsmodifizierenden Zusätze 12 werden gemäß Figur 3 zusammen mit dem Klärschlamm 8 und den Tonmineralien in einen Mischbehälter 13 eingebracht und dort mit einem Rührwerk 14 zu einer homogenen Suspension durchmischt. Diese homogene Suspension des Klärschlamms 8, der Tonmineralien 11 und der reaktionsmodifizierenden Zusätze 12 wird dann in das Vererdungsbecken 1 geleitet.

### BEZUGSZEICHENLISTE:

- 1 -: Vererdungsbecken
- 2 -: Abdichtung
- 3 -: Drainageschicht
- 4 -: Drainagekies
- 5 -: Pflanzsubstratschicht
- 6 -: Schilfpflanze
- 7 -: Zulauf
- 8 -: Klärschlamm
- 9 -: Wasser
- 10 -: aufgelandeter Klärschlamm
- 11 -: Tonminerale
- 12 -: reaktionsmodifizierende Zusatzstoffe
- 13 -: Mischbehälter
- 14 -: Rührwerk
- 15 -: Gebläse

## Patentansprüche

1. Verfahren zur Vererdung einer wässrigen Suspension organischer Stoffe, insbesondere von Klärschlamm, bei dem die Suspension über einen Zeitraum von mehreren Jahren intervallweise von oben in ein Vererdungsbecken eingebracht wird, wobei sich in dem Vererdungsbecken über einer unteren Abdichtung eine Drainageschicht und eine Pflanzsubstratschicht befindet, in die Pflanzen eingepflanzt sind, **dadurch gekennzeichnet, daß** Tonmineralien (11) zu der Suspension organischer Stoffe zugegeben werden.

2. Verfahren nach Anspruch 1, **dadurch gekennzeichnet, daß** die Tonmineralien (11) in suspendierter Form zugegeben werden.

3. Verfahren nach Anspruch 1 oder 2, **dadurch gekennzeichnet, daß** die Tonmineralien (11) der Suspension organischer Stoffe vor deren Einbringen in das Vererdungsbecken (1) zugegeben werden.

4. Verfahren nach einem der Ansprüche 1 bis 3, **dadurch gekennzeichnet, daß** die Tonmineralien (11) der in das Vererdungsbecken eingebrachten Suspension organischer Stoffe diskontinuierlich zugegeben werden.

5. Verfahren nach einem der Ansprüche 1 bis 4, **dadurch gekennzeichnet, daß** die Tonmineralien (11) der Suspension organischer Stoffe in einer solchen Menge zugesetzt werden, daß sich nach der Vererdung in dem Vererdungsbecken ein Massenverhältnis Ton zu Humus von 0,5 bis 5 ergibt.

6. Verfahren nach einem der Ansprüche 1 bis 5, **dadurch gekennzeichnet, daß** der Suspension organischer Stoffe weiterhin Kalk, Sand, Schluff, Gesteinsmehle, organische Stoffe mit hohem C:N Verhältnis, Nährsalze, Säuren, Basen und/oder als Säuren oder Basen wirksame Stoffe zugegeben werden.

7. Verfahren nach einem der Ansprüche 1 bis 6, **dadurch gekennzeichnet, daß** die Suspension organischer Stoffe ein aerob oder anaerob stabilisierter Klärschlamm (8) und/oder ein unter Methanentwicklung entstandenes Gärprodukt ist.

8. Verfahren nach einem der Ansprüche 1 bis 7, **dadurch gekennzeichnet, daß** die Suspension organischer Stoffe über einen Zeitraum von 6 bis 15 Jahren in das Vererdungsbecken (1) eingebracht wird, daß das Vererdungsbecken (1) anschließend für 1 bis 1,5 Jahre stehengelassen wird und daß das Vererdungsbecken anschließend zumindest teilweise geräumt wird.

9. Verfahren nach einem der Ansprüche 1 bis 8, **dadurch gekennzeichnet, daß** die Drainageschicht (3) aus Drainagekies (4) besteht.

10. Verfahren nach einem der Ansprüche 1 bis 9, **dadurch gekennzeichnet, daß** die in das Pflanzsubstrat (5) eingepflanzten Pflanzen (6) Schilfpflanzen sind.

## Claims

1. Process for transforming into humus an aqueous suspension of organic matter, especially sewage sludge, the suspension being introduced from above into a transformation basin at intervals over a period of time of several years, a drainage layer and a plant substrate layer into which plants are planted being arranged within the transformation basin above a lower sealing, **characterized in that** clay minerals (11) are added to the suspension of organic matter.

2. Process of claim 1, **characterized in that** the clay minerals (11) are added in suspended form.

3. Process of claim 1 or 2, **characterized in that** the clay minerals (11) are added to the suspension of organic matter before introducing it into the transformation basin (1).

4. Process according to any of the claims 1 to 3, **characterized in that** the clay minerals (1) are intermittently added to the suspension of organic matter introduced into the transformation basin.

5. Process of any of the claims 1 to 4, **characterized in that** the clay minerals (1) are added to the suspension of organic matter in such an amount that after transformation into humus in the transformation basin a mass ratio of clay : humus is in a range of 0,5 to 5.

6. Process according to any of the claims 1 to 5, **characterized in that** lime, sand, coarse clay, stone dust, organic matter with a high C : N ratio, nourishment salts, acids, bases and/or matters acting as an acid or a base are also added to the suspension of organic matter.

7. Process of any of the claims 1 to 6, **characterized in that** the suspension of organic matter is an aerobically or anaerobically stabilized sewage sludge (8) and/or a fermentation product produced under formation of methane.

8. Process of any of the claims 1 to 7, **characterized in that** the suspension of organic matter is introduced into the transformation basin (1) over a period of time of 6 to 15 years, that the transformation basin (1) is then allowed to stand for 1 to 1,5 years, and that the transformation basin is then at least partially emptied.

9. Process to any of the claims 1 to 8, **characterized in that** the drainage layer (3) is made of drainage gravel (4).

10. Process to any of the claims 1 to 9, **characterized in that** the plants (6) planted into the plant substrate (5) are reed plants.

## Revendications

1. Procédé de compostage d'une suspension aqueuse de matières organiques, en particulier de boues d'épuration, dans lequel la suspension est introduite par intervalles, pendant une période de plusieurs années, à partir du haut, dans un bassin de compostage dans lequel se trouvent, au-dessus d'une étanchéité inférieure, une couche de drainage et une couche de substrat végétal dans laquelle sont plantés des végétaux, **caractérisé en ce qu'**on ajoute des minéraux d'argile (11) à la suspension de matières organiques.

2. Procédé selon la revendication 1, **caractérisé en ce que** les minéraux d'argile (11) sont ajoutés sous forme de suspension.

3. Procédé selon la revendication 1 ou 2, **caractérisé en ce que** les minéraux d'argile (11) sont ajoutés à la suspension de matières organiques avant leur introduction dans le bassin de compostage (1).

4. Procédé selon l'une des revendications 1 à 3, **caractérisé en ce que** les minéraux d'argile (11) de la suspension de matières organiques introduite dans le bassin de compostage sont ajoutés de manière discontinue.

5. Procédé selon l'une des revendications 1 à 4, **caractérisé en ce que** les minéraux d'argile (11) sont ajoutés à la suspension de matières organiques dans une quantité telle qu'après le compostage, on obtienne dans le bassin de compostage un rapport des masses de l'argile à l'humus de 0,5 à 5.

6. Procédé selon l'une des revendications 1 à 5, **caractérisé en ce qu'**on ajoute encore à la suspension de matières organiques de la chaux, du sable, de l'ardoise, de la roche pulvérisée, des matières organiques avec un rapport C:N élevé, des sels nutritifs, des acides, des bases et/ou des substances agissant comme des acides ou des bases.

7. Procédé selon l'une des revendications 1 à 6, **caractérisé en ce que** la suspension de matières organiques est constituée de boues de clarification (8) stabilisées de manière aérobie ou anaérobie et/ou un produit de fermentation obtenu par dégagement de méthane.

8. Procédé selon l'une des revendications 1 à 7, **caractérisé en ce que** la suspension de matières organiques est introduite dans le bassin de compostage (1) pendant une période de six à quinze ans, **en ce que** le bassin de compostage (1) est ensuite laissé pendant 1 à 1,5 an et **en ce que** le bassin de compostage est ensuite vidé au moins partiellement.

9. Procédé selon l'une des revendications 1 à 8, **caractérisé en ce que** la couche de drainage (3) est constituée de graviers de drainage (4).

10. Procédé selon l'une des revendications 1 à 9, **caractérisé en ce que** les plantes (6) plantées dans le substrat végétal (5) sont des roseaux.
